# EUROPEAN PATENT APPLICATION

(11) **EP 3 176 759 A1**
(43) Date of publication of application: **07.06.2017**
(21) Application number: 16739007.9
(22) Date of filing: 13.05.2016
(51) Int. Cl.: G07C 5/00, G07C 5/08, G01C 25/00

(54) **VEHICLE TERMINAL**

(30) Priority: 23.10.2015 CN 201510697680
(71) Applicant: LE Holdings (Beijing) Co., Ltd., Beijing 100025 (CN); Leauto Intelligent Technology (BEIJING) Co. Ltd, Beijing 100025 (CN)
(72) Inventor: The designation of the inventor has not yet been filed
(74) Representative: Cohausz & Florack
(86) International application number: PCT/CN2016/082092
(87) International publication number: WO 2017/067155

(57) **Abstract**

The present invention provides a vehicle terminal including a gravity sensor, a cantilever, a universal adjusting fitting, and a vehicle terminal body, where the gravity sensor is mounted on the cantilever; and one end of the cantilever is mounted on the vehicle terminal body through the universal adjusting fitting. The device according to the present invention can calibrate the gravity sensor after the vehicle terminal is mounted on a vehicle, so that the gravity sensor can obtain an accurate detection result to thereby provide the accuracy of acceleration, yaw angle, and orientation information determined by the vehicle terminal according to a preset reference.

## Description

This application claims the benefit of Chinese Patent Application No. 201510697680.1, filed with the State Intellectual Property Office of People's Republic of China on October 23, 2015 and entitled "Vehicle terminal", which is hereby incorporated by reference in its entirety.

### FIELD

Embodiments of the present invention relate to the field of communications and particularly to a vehicle terminal.

### BACKGROUND

A vehicle terminal, e.g., an On-Board Diagnostic (OBD) system, a Telematics Box (T-Box), an event data recorder, etc., is generally equipped with a gravity sensor. The vehicle terminal can determine a driving state of a vehicle, e.g., slamming on the brake, heavy acceleration, sharp turning, etc., according to a detection result of the gravity sensor so that an accident can be appraised. Further, the gravity sensor can be configured for inertia navigation, etc.

The gravity sensor to be used needs to be firstly calibrated to obtain a preset reference, and acceleration, yaw angle, and orientation information will be determined according to a detection result of the gravity sensor in use, and the preset reference. Thus the accuracy of the detection result of the gravity sensor will be affected by the calibration of the gravity sensor.

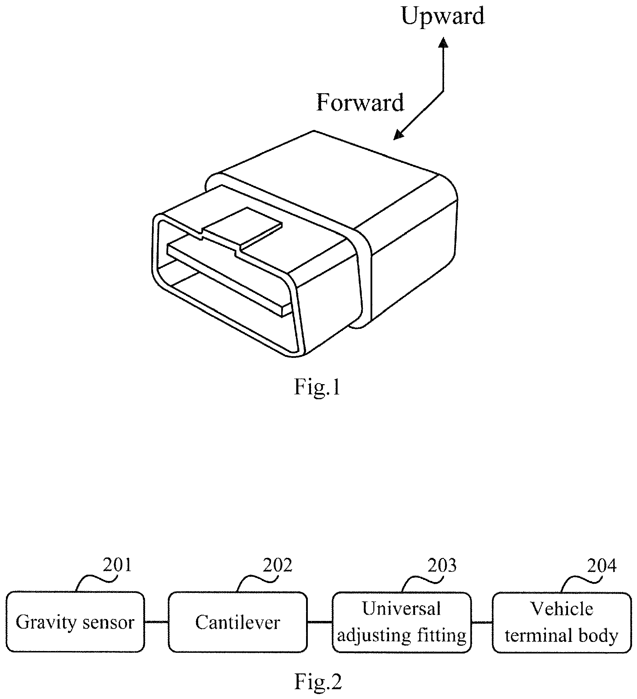

At present the gravity sensor of the vehicle terminal is calibrated by placing the vehicle terminal horizontally, and orienting the gravity sensor toward preset calibration directions, before the vehicle terminal is shipped from a factory. Particularly the calibration and use of the vehicle terminal will be described taking the OBD system as an example.
1. Before the vehicle terminal is shipped from the factory, the preset calibration directions are defined, for example, as the forward direction (typically the direction of the head of the assembled vehicle) and the upward direction illustrated in Fig.1, and the OBD system is placed on the horizontal plane. A detection result of the gravity sensor of the OBD system at this time is stored and regarded as the preset reference.
2. The OBD system to be used is mounted on the vehicle.
3. The vehicle terminal in use obtains and compares a detection result of the gravity sensor with the preset reference to calculate the acceleration, yaw angle, and orientation of the vehicle.

The inventors have identified during their studies that the vehicle terminal in use tends to be mounted at a position somewhat deviating from a nominal position. If the position deviates significantly from the nominal position, then the detection result of the motionless gravity sensor in mounted vehicle terminal may disagree with the preset reference, so that the gravity sensor can not provide any accurate detection result, and consequently the acceleration, yaw angle, and orientation information determined according to the preset reference may not be accurate.

### SUMMARY

An embodiment of the present invention provides a vehicle terminal so as to address such a problem in the prior art that the position at which the vehicle terminal is mounted deviates from the nominal position, so that the gravity sensor can not provide any accurate detection result, and consequently the acceleration, yaw angle, and orientation information determined according to the preset reference may not be accurate.

A particular technical solution according to the embodiment of the present invention is as follows:

The present invention provides a vehicle terminal including a gravity sensor, a cantilever, a universal adjusting fitting, and a vehicle terminal body, where:
the gravity sensor is mounted on the cantilever; and
one end of the cantilever is mounted on the vehicle terminal body through the universal adjusting fitting.

In the embodiments of the disclosure, a gravity sensor is connected with the vehicle terminal body through the universal adjusting fitting, so that the position of the gravity sensor can be further adjusted after the vehicle terminal is mounted on a vehicle (that is, the gravity sensor of a vehicle terminal is mounted outside the vehicle terminal body in order for the adjustment by the universal adjusting fitting, instead of being built inside the vehicle terminal body), to thereby calibrate the gravity sensor. Thus if the vehicle terminal is being motionless, then a detection result obtained by the gravity sensor will agree with a preset reference, and the gravity sensor in use can provide the accurate detection result to thereby improve the accuracy of acceleration, yaw angle, and orientation information determined according to the preset reference.

### BRIEF DESCRIPTION OF THE DRAWINGS

Fig.1 illustrates a schematic diagram of the directions in which the gravity sensor of the vehicle terminal is arranged for calibration in the prior art;
Fig.2 illustrates a schematic structural diagram of a vehicle terminal according to an embodiment of the present invention;
Fig.3 illustrates a schematic structural diagram of a vehicle terminal according to another embodiment of the present invention;
Fig.4 illustrates a schematic structural diagram of a vehicle terminal according to a further embodiment of the present invention; and
Fig.5 illustrates a schematic structural diagram of a vehicle terminal according to a still further embodiment of the present invention.

### DETAILED DESCRIPTION

In order to make the objects, technical solutions, and advantages of the embodiments of the present invention more apparent, the technical solutions in the embodiments of the present invention will be described below clearly and fully with reference to the drawings in the embodiments of the present invention, and apparently the embodiments described here are some but not all of the embodiments of the present invention. All the other embodiments which can occur to those ordinarily skilled in the art based upon the embodiments in the present invention without any inventive effort shall fall into the scope of the present invention as claimed.

In the embodiments of the present invention, a gravity sensor of a vehicle terminal is arranged outside the vehicle terminal body instead of being built inside the vehicle terminal body. Particularly the gravity sensor is connected with the vehicle terminal body through the universal adjusting fitting, so that the position of the gravity sensor can be further adjusted after the vehicle terminal is mounted on a vehicle, to thereby calibrate the gravity sensor. Thus if the vehicle terminal is being motionless, then a detection result obtained by the gravity sensor will agree with a preset reference, and the gravity sensor in use can provide the accurate detection result to thereby improve the accuracy of acceleration, yaw angle, and orientation information determined according to the preset reference.

A vehicle terminal according to an embodiment of the present invention will be described below in details.

As illustrated in Fig.2, there is illustrated a schematic structural diagram of a vehicle terminal according to an embodiment of the present invention, where the vehicle terminal includes a gravity sensor 201, a cantilever 202, a universal adjusting fitting 203, and a vehicle terminal body 204, where:

The gravity sensor 201 is mounted on the cantilever 202; and
One end of the cantilever 202 is mounted on the vehicle terminal 204 through the universal adjusting fitting 203.

Particularly the cantilever 202 can have the gravity sensor 201 oriented toward preset calibration directions through the universal adjusting fitting.

In the embodiment of the present invention, the gravity sensor is connected with the vehicle terminal body through the universal adjusting fitting, so that the position of the gravity sensor can be adjusted through the universal adjusting fitting after the vehicle terminal is mounted on the vehicle (that is, the gravity sensor of the vehicle terminal is arranged outside the vehicle terminal body instead of being built inside the vehicle terminal body, to facilitate adjustment through the universal adjusting fitting), to thereby calibrate the gravity sensor. Thus if the vehicle terminal is being motionless, then a detection result obtained by the gravity sensor will agree with a preset reference, and the gravity sensor in use can provide the accurate detection result to thereby improve the accuracy of acceleration, yaw angle, and orientation information determined according to the preset reference.

Particularly in an embodiment, the cantilever can be solid, and the gravity sensor can be fixed on outside of the cantilever. Of course, in order to protect the gravity sensor, the gravity sensor 201 is mounted inside the cantilever 202, and in a particular implementation, the cantilever is provided with a groove, and the gravity sensor is mounted inside the groove.

Particularly in an embodiment, in order to facilitate adjustment of the position of the gravity sensor, the universal adjusting fitting 203 can include any one of a spheric hinge, a universal joint, etc. In a particular implementation, the universal adjusting fitting can be selected as needed in practice, although the embodiment of the present invention will not be limited thereto.

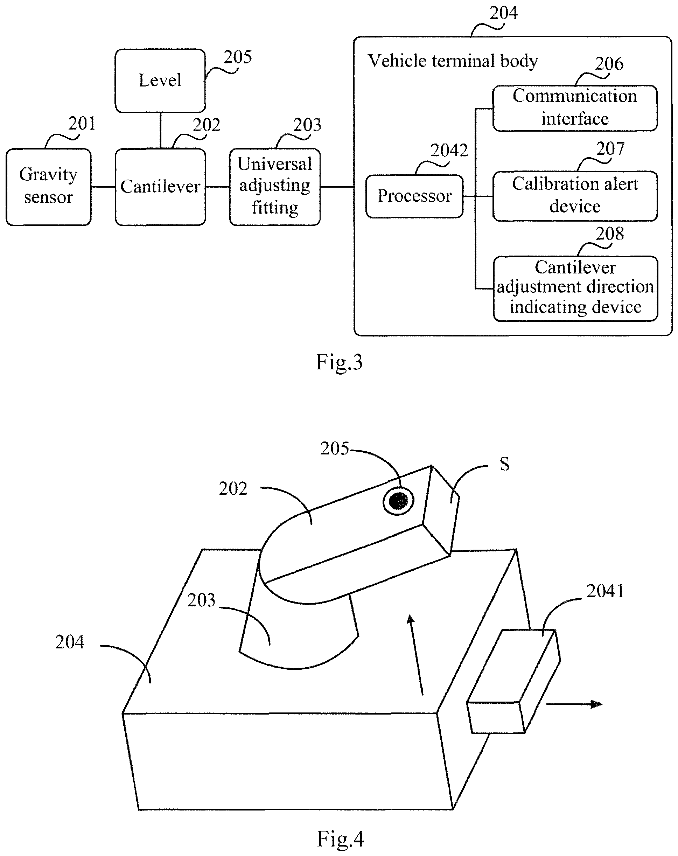

Particularly in an embodiment, as illustrated in Fig.3, in order to facilitate horizontal adjustment of the cantilever (that is, the vehicle terminal is placed horizontally into the same horizontal state as when it was calibrated while being shipped from a factory), the vehicle terminal further includes a level 205 mounted on the upper surface of the cantilever 202.

In order to facilitate understanding, the vehicle terminal including the level 205 in the embodiment of the present invention will be described below in details with reference to Fig.4. In Fig.4, the vehicle terminal body 204 includes a plug 2041 pointing to directions (i.e., the direction in which the transverse arrow is directed, and the upward direction perpendicular to the upper surface of the vehicle terminal body 204, i.e., the direction in which the upward arrow is directed) which are the preset calibration directions; and the universal adjusting fitting 203 is mounted on the upper surface of the vehicle terminal body 204, the other end of the universal adjusting fitting 203 is connected with the cantilever 202, the gravity sensor is mounted inside the cantilever 202, the level 205 is fixed on the upper surface of the cantilever 202, the free end of the cantilever is illustrated as the face denoted as S, and the orientation of the free end of the cantilever can be adjusted through the universal adjusting fitting. It shall be noted that the preset calibration directions in Fig.4 may or may not agree with the preset calibration directions in Fig.1, and the preset calibration directions are only used for calibrating the gravity sensor, so they can be set as needed in practice in a particular implementation, although the embodiment of the present invention will not be limited thereto.

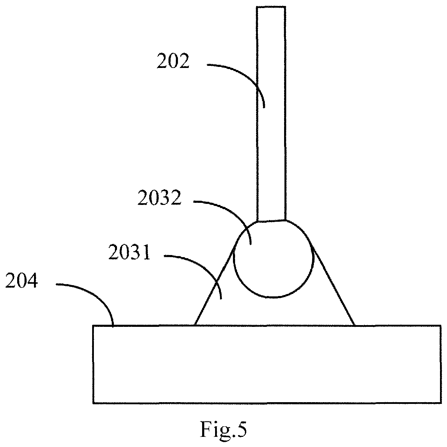

Particularly in an embodiment, if the universal adjusting fitting is a spheric hinge, then one end of the cantilever can be mounted on the vehicle terminal body through the universal adjusting fitting in the following structure, as illustrated in Fig.5:
The spheric hinge includes a ball seat 2031 and a ball body 2032;
The ball seat 2031 is provided with a sphere groove;
A ball body 2032 is constrained inside the sphere groove, and the ball seat and the ball body cooperate into the spheric hinge structure;
At this time one end of the cantilever is mounted on the vehicle terminal body through the universal adjusting fitting particularly as follows:
   The ball seat 2031 is mounted on the vehicle terminal body 204; and the ball body 2032 is connected with one end of the cantilever 202, and the cantilever is mounted outside the ball seat 2031.

Particularly in an embodiment, the universal adjusting fitting is equipped with a circuit interface, so that the gravity sensor 201 is connected with a mainboard in the vehicle terminal body 204 via the circuit interface.

Particularly in an embodiment, the vehicle terminal body includes a processor, and as illustrated in Fig.3, in order to calibrate the gravity sensor, the vehicle terminal which is being motionless can send the detection result of the gravity sensor, and the preset reference to a smart terminal for calibration. Particularly the vehicle terminal further includes:
A communication interface 206 connected with a processor 2042 in the vehicle terminal body 204, where:
   The communication interface 206 is configured to send the detection result obtained by the processor of the vehicle terminal body 204 from the gravity sensor 201 while the vehicle terminal mounted on the vehicle is being motionless, and the preset reference to the smart terminal (not illustrated), so that the smart terminal generates an alert upon determining that the difference between the detection result and the preset reference is more than a preset difference. Thus the user can check whether the gravity sensor is calibrated, through the smart terminal.

Particularly in an embodiment, for example, the smart terminal is a smart handset, a smart bracelet, a tablet computer, and other devices capable of communication and processing data as well as generating an alert, although the embodiment of the present invention will not be limited thereto.

Particularly in an embodiment, the communication interface can be a wired interface, e.g., a USB cabled interface.

Particularly in an embodiment, in order to facilitate communication, the communication interface can be a wireless communication interface. For example, the wireless communication interface may be Bluetooth, WiFi, a 2G communication module, a 3G communication module, a 4G communication module, etc.

It shall be noted that if the communication interface 206 is a wireless communication interface, then it can be arranged inside the vehicle terminal body as illustrated in Fig.3. Of course, it can alternatively be arranged outside the vehicle terminal body. In a particular implementation, it can be arranged as needed in practice, although the embodiment of the present invention will not be limited thereto.

Particularly in an embodiment, in order to facilitate determination of a calibration result by the vehicle terminal, as illustrated in Fig.3, the vehicle terminal further includes:
A calibration alert device 207 connected with the processor 2042 of the vehicle terminal body 204, where:
   The gravity sensor 201 is configured to send the detection result thereof to the processor 2042 in the vehicle terminal body, while the vehicle is being motionless, after being mounted on the vehicle; and
   The processor 2042 is configured to judge whether the difference between the detection result and the preset reference is less than or equal to the preset difference, and if not, to send an alert instruction to adjust the position of the gravity sensor, to the calibration alert device 207 for generating an alert.

Particularly in an embodiment, the calibration alert device 207 can be any one or more of an audio device, an indicating lamp, and a display screen. In a particular implementation, the calibration alert device 207 generates an alert, upon reception of the alert instruction of the processor 2042, to instruct the user to adjust the cantilever through the universal adjusting fitting for the purpose of adjusting the position of the gravity sensor so as to calibrate the gravity sensor.

It shall be noted that if the calibration alert device 207 is an audio device, then it can be arranged inside the vehicle terminal body as illustrated in Fig.3. Of course, it can alternatively be arranged outside the vehicle terminal body. In a particular implementation, it can be arranged as needed in practice, although the embodiment of the present invention will not be limited thereto.

Particularly in an embodiment, in order to facilitate adjustment, as illustrated in Fig.3, the vehicle terminal further includes a cantilever adjustment direction indicating device 208 connected with the processor 2042 of the vehicle terminal body 204, where:

The processor 2042 is further configured, upon determining that the difference between the detection result and the preset reference is more than the preset difference, to calculate the adjustment direction of the cantilever according to the detection result and the preset reference, and to send the result of the calculation to the cantilever adjustment direction indicating device for output. For example, the detection result includes an acceleration, a yaw angle, and an orientation, and the preset reference includes a preset acceleration, a preset yaw angle, and a preset orientation, so that the adjustment direction (e.g., leftward, upward, downward, and rightward adjustment) can be determined according to the difference between the yaw angles, and the difference between the orientations, and the processor determines and then passes the adjustment direction to the cantilever adjustment direction indicating device 208 for output, so that the user can know how to further adjust the cantilever.

Particularly in an embodiment, the cantilever adjustment direction indicating device 208 is any one or more of an audio device, an indicating lamp, and a display screen.

It shall be noted that if the cantilever adjustment direction indicating device 208 is an audio device, then it can be arranged inside the vehicle terminal body as illustrated in Fig.3. Of course, it can alternatively be arranged outside the vehicle terminal body. In a particular implementation, it can be arranged as needed in practice, although the embodiment of the present invention will not be limited thereto.

Particularly in an embodiment, in order to facilitate understanding, an application of the vehicle terminal according to an embodiment of the present invention will be described. The vehicle terminal according to the embodiment of the present invention can be calibrated while being shipped from a factory and after being mounted on the vehicle, particularly as follows

1) Calibration while being shipped from the factory:
The vehicle terminal is placed on the horizontal plane, and if there is a level on the cantilever of the vehicle terminal, then the cantilever can be adjusted through the level so that the cantilever is placed horizontally. A detection result of the gravity sensor when the cantilever is placed horizontal and oriented toward the preset calibration directions is regarded as a preset reference and stored.

Of course, if there is no level on the cantilever of the vehicle terminal, then a detection result of the gravity sensor when the cantilever is oriented toward the preset calibration directions can be regarded by the user as a preset reference and stored.

2) While the vehicle terminal mounted on the vehicle is being motionless, after the cantilever is oriented toward the preset calibration directions, a detection result of the gravity sensor is obtained and compared with the preset reference, the difference between them is calculated, and if the difference is more than a preset threshold, then it indicates that the gravity sensor needs to be calibrated, so the cantilever is adjusted through the universal adjusting fitting, and then another detection result is obtained, and this process is repeated until the difference between the detection result and the preset reference is less than or equal to the preset threshold.

In a particular implementation, the processor of the smart terminal or the vehicle terminal can judge whether difference between the detection result and the preset reference is more than the preset difference according to the embodiment above, although a repeated description thereof will be omitted here.

In summary, with the universal adjusting fitting for the gravity sensor of the vehicle terminal according to the embodiments of the present invention, the position of the gravity sensor can be adjusted after the vehicle terminal is mounted on the vehicle, to thereby calibrate the gravity sensor. Thus if the vehicle terminal is being motionless, then the detection result obtained by the gravity sensor will agree with the preset reference, and the gravity sensor in use can provide the accurate detection result to thereby improve the accuracy of the acceleration, yaw angle, and orientation information determined according to the preset reference.

It shall be noted that the respective figures above are only schematic diagrams, and the proportions of the respective components in the figures are set as needed in practice, although the present invention will not be limited thereto.

The embodiments of the device described above are only exemplary, where the units as separate components may or may not be physically separate, and the components illustrated as units may or may not be physical units, that is, they can be co-located or can be distributed on a plurality of network elements. A part or all of the units can be selected as needed in reality for the purpose of the solution according to the embodiments of the invention. This can be understood and practiced by those ordinarily skilled in the art without any inventive effort.

Those skilled in the art can clearly appreciate from the foregoing description of the embodiments that the embodiments of the invention can be implemented in hardware or in software plus a necessary general hardware platform. Based upon such understanding, the technical solutions above essentially or their parts contributing to the prior art can be embodied in the form of a computer software product which can be stored in a computer readable storage medium, e.g., an ROM/RAM, a magnetic disk, an optical disk, etc., and which includes several instructions to cause a computer device (e.g., a personal computer, a server, a network device, etc.) to perform the method according to the respective embodiments of the invention.

Lastly it shall be noted that the embodiments above are merely intended to illustrate but not to limit the technical solution of the invention; and although the invention has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the invention as claimed.

## Claims

1. A vehicle terminal, the vehicle terminal comprising:
a gravity sensor, a cantilever, a universal adjusting fitting, and a vehicle terminal body, wherein:
the gravity sensor is mounted on the cantilever; and
one end of the cantilever is mounted on the vehicle terminal body through the universal adjusting fitting.

2. The vehicle terminal according to claim 1, wherein the cantilever is provided with a groove, and the gravity sensor is mounted inside the groove.

3. The vehicle terminal according to claim 1, wherein the vehicle terminal further comprises:
a level mounted on an upper surface of the cantilever.

4. The vehicle terminal according to claim 1, wherein the universal adjusting fitting comprises one of a spheric hinge and a versatile joint.

5. The vehicle terminal according to claim 4, wherein if the universal adjusting fitting is a spheric hinge, then the spheric hinge comprises a ball seat and a ball body, wherein:
the ball seat is provided with a sphere groove;
the ball body is constrained inside the sphere groove, and the ball seat and the ball body cooperate into the spheric hinge structure;
the one end of the cantilever is mounted on the vehicle terminal body through the universal adjusting fitting in such a way that:
the ball seat is mounted on the vehicle terminal body; and the ball body is connected with the one end of the cantilever, and the cantilever is mounted outside the ball seat.

6. The vehicle terminal according to claim 1, wherein the vehicle terminal body comprises a processor, and the vehicle terminal further comprises:
a communication interface connected with the processor or the vehicle terminal body, wherein:
the communication interface is configured to send a detection result obtained by the processor of the vehicle terminal body from the gravity sensor while the vehicle terminal mounted on a vehicle is being motionless, and a preset reference to a smart terminal, so that the smart terminal generates an alert upon determining that a difference between the detection result and the preset reference is more than a preset difference.

7. The vehicle terminal according to claim 6, wherein the communication interface is a wireless communication interface.

8. The vehicle terminal according to claim 1, wherein the vehicle terminal body comprises a processor, and the vehicle terminal further comprises:
a calibration alert device connected with the processor of the vehicle terminal body, wherein:
the gravity sensor is configured to send a detection result thereof to the processor in the vehicle terminal body, while a vehicle is being motionless, after being mounted on the vehicle; and
the processor is configured to judge whether a difference between the detection result and a preset reference is less than or equal to a preset difference, and if not, to send an alert instruction to adjust a position of the gravity sensor, to the calibration alert device for generating an alert.

9. The vehicle terminal according to claim 8, wherein the calibration alert device comprises any one or more of an audio device, an indicating lamp, and a display screen.

10. The vehicle terminal according to claim 7, wherein the vehicle terminal further comprises a cantilever adjustment direction indicating device connected with the processor of the vehicle terminal body, wherein:
the processor is further configured, upon determining that the difference between the detection result and the preset reference is more than the preset difference, to calculate an adjustment direction of the cantilever according to the detection result and the preset reference, and to send the result of the calculation to the cantilever adjustment direction indicating device for output.

11. The vehicle terminal according to claim 10, wherein the cantilever adjustment direction indicating device comprises any one or more of an audio device, an indicating lamp, and a display screen.
